Europäisches Patentamt

European Patent Office

Office européen des brevets

(19)

(11) Veröffentlichungsnummer: **0 295 589 B1**

## (12) EUROPÄISCHE PATENTSCHRIFT

(45) Veröffentlichungstag der Patentschrift: **25.03.92**

(51) Int. Cl.⁵: **B60D 1/14**, B62D 13/02

(21) Anmeldenummer: **88109323.1**

(22) Anmeldetag: **11.06.88**

(54) **Kurzkupplungssystem.**

(30) Priorität: **16.06.87 DE 3720035**

(43) Veröffentlichungstag der Anmeldung:
**21.12.88 Patentblatt 88/51**

(45) Bekanntmachung des Hinweises auf die
Patenterteilung:
**25.03.92 Patentblatt 92/13**

(84) Benannte Vertragsstaaten:
**BE DE FR NL**

(56) Entgegenhaltungen:
EP-A- 0 176 442        DE-A- 2 721 975
DE-A- 2 950 121        DE-U- 7 830 562
DE-U- 8 629 045        FR-A- 968 529
US-A- 2 807 477

(73) Patentinhaber: **GEBR. WACKENHUT GMBH**
**Karosserie- und Fahrzeugfabrik**
**Nagold/Schwarzwald**
**Altensteiger Strasse 49**
**W-7270 Nagold(DE)**

(72) Erfinder: **Dorfinger, Heinz D.**
**Amselweg 69**
**W-7034 Gärtringen(DE)**
Erfinder: **Kunzfeld, Herbert F., Dipl.-Ing.**
**Hofstettenweg 8**
**W-7032 Sindelfingen(DE)**
Erfinder: **Finsterbusch, Peter**
**Weissdornweg 13**
**W-7270 Nagold(DE)**
Erfinder: **Baudenbacher, Michael, Dipl.-Ing.**
**Schulweg 2**
**W-7271 Rohrdorf(DE)**

(74) Vertreter: **Manitz, Gerhart, Dr. Dipl.-Phys. et al**
**MANITZ, FINSTERWALD & ROTERMUND Seel-**
**bergstrasse 23/25**
**W-7000 Stuttgart 50(DE)**

## Beschreibung

Die Erfindung betrifft ein Kurzkupplungssystem für einen aus Zugfahrzeug und Anhänger bestehenden Lastzug mit einer zum Ankuppeln des Anhängers dienenden zugfahrzeugseitigen Kupplungsanordnung, welche an einem um eine zugfahrzeugfeste Hochachse schwenkbaren Ausschub- bzw. Stellaggregat mit zur Hochachse radialem Stellweg gehaltert ist und vom Ausschub- bzw. Stellaggregat bei Auslenkung aus einer fahrzeugmittigen Lage unter Vergrößerung des Abstandes zur Hochachse ausgeschoben wird, sowie mit einer in die Kupplungsanordnung lösbar einkuppelbaren anhängerseitigen Zuggestängeanordnung, welche in einer Mittellage relativ zur Kupplungsanordnung seitenunbeweglich bzw. ohne Schwenkbeweglichkeit in Seitwärtsrichtung arretierbar ist.

Ein aus dem DE-U 85 05 739 bekanntes derartiges System besitzt eine Konstruktion, bei der das Ausschub- bzw. Stellaggregat einen die Kupplungsanordnung halternden Schlitten besitzt, welcher in einer Schienenführung verschiebbar gehalten ist, die ihrerseits am Zugfahrzeug um die zugfahrzeugfeste Hochachse schwenkbar angeordnet ist. Mittels eines Kurbelgetriebes werden die Kupplungsanordnung bzw. der Schlitten zwangsweise nach radial außen verschoben, wenn die Schienenführung aus einer Mittellage relativ zum Zugfahrzeug zur einen oder anderen Fahrzeugseite hin ausschwenkt. Da die anhängerseitige Zuggestängeanordnung beim Fahrbetrieb relativ zur Kupplungsanordnung in einer Mittellage seitenunbeweglich arretiert gehalten wird, wird auf diese Weise zwischen Zugfahrzeug und Anhänger eine Zugverbindung gebildet, deren Länge sich bei Auslenkung der Zugverbindung aus einer Mittellage relativ zum Zugfahrzeug vergrößert.

Bei diesem Kurzkupplungssystem werden am Kurveneingang und Kurvenausgang bzw. bei Änderung des Lenkwinkels der zugfahrzeugseitigen Lenkräder unter Umständen erhebliche Drehmomente auf das Zugfahrzeug relativ zu dessen Hochachse ausgeübt, weil die zur Veränderung der Länge der Zugverbindung zwischen Zugfahrzeug und Anhänger notwendigen Kräfte allein durch die Schwenkung von Zugfahrzeug und Anhänger relativ zueinander erzeugt werden. Dabei kommt erschwerend hinzu, daß die Richtungen dieser Drehmomente auf Steigungen und Gefällestrecken unterschiedlich sind und die Stärke der Drehmomente stark vom Maß der Steigung bzw. des Gefälles abhängt. Außerdem wird die Stärke der Drehmomente auch von eventuellen Beschleunigungen oder Verzögerungen der Fahrzeuge verändert. Insbesondere auf rutschigem Untergrund kann dafür ein Lastzug mit dem Kurzkupplungssystem der im DE-U 85 05 739 beschriebenen Art ein äußerst problematisches Fahrverhalten haben.

Die DE-A 27 21 975 zeigt einen Lastkraftwagen, dessen zum Ankuppeln eines Anhängers dienende Kupplungsanordnung mittels Motorantriebes in Fahrzeuglängsrichtung zwischen einer vorderen und einer hinteren Endlage verschiebbar ist. Bei Geradeausfahrt kann die Kupplungsanordnung in die vordere Lage gebracht werden, so daß ein gegebenenfalls angekuppelter Anhänger mit engem Abstand hinter dem Lastkraftwagen geführt wird. Bei Kurvenfahrt wird dann die Kupplungsanordnung in Fahrzeuglängsrichtung nach rückwärts verschoben, um den Abstand zwischen Zugfahrzeug und Anhänger zu vergrößern und eine Kollision zwischen den beiden Fahrzeugen zu vermeiden. Zur Steuerung des Motorantriebes der Kupplungsanordnung kann ein Geber dienen, der die Winkellage des anhängerseitigen Zuggestänges relativ zum Zugfahrzeug registriert.

Aus der US-A 28 07 477 ist ein Sattelzug bekannt, bei dem der Sattelauflieger am Zugfahrzeug auf einer die Knickbewegung zwischen Zugfahrzeug und Sattelauflieger ermöglichenden Sattelkupplung gelagert ist, die mittels Motorantriebes in Längsrichtung des Zugfahrzeuges verschiebbar ist. Damit soll ermöglicht werden, den Sattelauflieger bei Geradeausfahrt mit geringem Abstand zwischen Fahrerhaus des Zugfahrzeuges und Vorderende des Sattelauffliegers zu führen; dagegen wird bei Kurvenfahrt die Sattelkupplung nach rückwärts verschoben, um eine Kollision zwischen dem Fahrerhaus und dem Vorderende des Sattelauffliegers aufgrund der bei Kurvenfahrt erfolgenden Knickbewegung zwischen Zugfahrzeug und Sattelauflieger zu vermeiden.

Sowohl bei einer Anordnung gemäß der US-A 28 07 477 als auch bei einer Anordnung gemäß der DE-A 27 21 975 zeigt sich beim normalen Fahrbetrieb aufgrund der bei Kurvenfahrt erfolgenden Verschiebung der jeweiligen Kupplungsanordnung in Längsrichtung des Zugfahrzeuges eine entsprechende Verschiebung des Angriffspunktes der vom jeweiligen Anhänger bzw. Sattelauflieger auf das Zugfahrzeug ausgeübten Zug- bzw. Schubkräfte. Damit verbunden ist eine erhebliche Veränderung des Lenkverhaltens des Zugfahrzeuges, so daß diese bekannten Konstruktionen wiederum bezüglich des Fahrverhaltens der damit ausgerüsteten Fahrzeuge problematisch sind, insbesondere auf rutschigem Untergrund.

Im übrigen wird bei den bekannten Systemen nicht ausreichend berücksichtigt, daß das Ankuppeln des Anhängers an das Zugfahrzeug bei Kurzkupplungssystemen grundsätzlich problematisch ist, weil zwischen Zugfahrzeug und Anhänger nur wenig Platz vorhanden ist und dementsprechend Personen, die sich zum Ankuppeln des Anhängers an das Zugfahrzeug zwangsläufig zwischen den beiden Fahrzeugen aufhalten müssen, sehr gefährdet sind.

Deshalb ist es Aufgabe der Erfindung, ein Kurzkupplungssystem zu schaffen, welches das Fahr- und Lenkverhalten eines Lastzuges weitestgehend unbeeinflußt läßt und auch bei besonderen Betriebsbedingungen, z.B. beim Ankuppeln des Anhängers an das Zugfahrzeug oder beim Auffahren auf steile Rampen od.dgl., ein hohes Maß an Sicherheit gewährleistet.

Diese Aufgabe wird bei einem Kurzkupplungssystem der eingangs angegebenen Art erfindungsgemäß dadurch gelöst, daß das Ausschub- bzw. Stellaggregat motorisch angetrieben ist, wobei der Motorantrieb von einem Geber in Abhängigkeit von der Auslenkung direkt oder indirekt gesteuert wird, und daß das Ausschub- bzw. Stellaggregat eine arretierbare Kuppel-bzw. Sonderposition besitzt, in der das Ausschub- bzw. Stellaggregat in seiner Mittellage und die Kupplungsanordnung in einer relativ zum Zugfahrzeug nach rückwärts verschobenen Lage zugfahrzeugfest arretiert sind.

Erfindungsgemäß kann also die zur Längenänderung der Zugverbindung zwischen Zugfahrzeug und Anhänger notwendige Arbeit lediglich den Antrieb des Ausschub- bzw. Stellaggregates unterschiedlich belasten. Dementsprechend wird vermieden, daß diese Arbeit eine die relative Schwenkung zwischen Zugfahrzeug und Anhänger bei Kurvenfahrt unterstützende oder hindernde Wirkung ausüben kann. Darüber hinaus bleibt der Angriffspunkt der vom Anhänger auf das Zugfahrzeug ausgeübten Zug- oder Schubkräfte am Zugfahrzeug unverändert.

Auf diese Weise wird gewährleistet, daß das Kurzkupplungssystem keinerlei negative Einflüsse auf das Fahrverhalten des Lastzuges haben kann. Dies ist insbesondere dann von erheblichem Vorteil, wenn auf rutschigem Untergrund kurvenreiche Gefällestrecken oder Steigungen durchfahren werden müssen.

Durch die zusätzlich vorgesehene arretierbare Kuppel- bzw. Sonderposition kann besonderen Fahrsituationen Rechnung getragen werden.

So kann beispielsweise durch Ausfahren des Ausschub- bzw. Stellaggregates der Abstand zwischen Zugfahrzeug und Anhänger auch bei Geradeausfahrt vergrößert werden, beispielsweise um auf steile Rampen an Fähren od.dgl. auffahren zu können, ohne eine Kollision zwischen der oberen horizontalen Heckkante des Zugfahrzeuges und der gegenüberliegenden horizontalen Vorderkante des Anhängers befürchten zu müssen.

Aufgrund der arretierbaren Kuppel- bzw. Sonderposition können das An- und Abkuppeln des Anhängers bei vergleichsweise großen Abständen zwischen Zugfahrzeug und Anhänger erfolgen, so daß eine hohe Sicherheit für Hilfskräfte zwischen Zugfahrzeug und Anhänger gegeben ist.

Außerdem können Rangiermanöver oftmals leichter ausgeführt werden, wenn die Kupplungsanordnung in der Kuppel- bzw. Sonder-position bzw. wenn das Ausschub- bzw. Stellaggregat in einer Mittellage der Kupplungsanordnung gegen Schwenkung arretiert sind.

Im übrigen kann das Zugfahrzeug bei Arretierung des Ausschub-bzw. Stellaggregates oder der Kupplungsanordnung in Mittellage auch mit solchen Anhängern kombiniert werden, deren Zuggestänge nach Ankuppeln an das Zugfahrzeug nicht in einer Mittellage relativ zur Kupplungsanordnung seitenunbeweglich bzw. ohne Schwenkbeweglichkeit in Seitwärtsrichtung arretierbar oder arretiert sind.

Schließlich werden auch Manöver mit Rückwärtsfahrt durch die Arretierung des Ausschubbzw. Stellaggregates bzw. der Kupplungsanordnung erleichtert.

Des weiteren bietet die Erfindung den Vorzug, daß die Kinematik bzw. der funktionale Zusammenhang zwischen der Auslenkung der Kupplungsanordnung bzw. des Ausschub- bzw. Stellaggregates und dem Ausschub- bzw. Stellweg allein durch Abänderung der Steuerung und damit ohne konstruktive Abänderung des Ausschub-bzw. Stellaggregates verändert werden können.

Gemäß einer besonders bevorzugten erfindungsgemäßen Ausführungsform, für die selbständiger Schutz beansprucht wird, ist vorgesehen, daß das Ausschub- bzw. Stellaggregat wiederum motorisch angetrieben ist, wobei der Motorantrieb von einem Geber in Abhängigkeit von der Auslenkung direkt oder indirekt gesteuert wird, und daß für normale Straßenfahrt eine automatische Betriebsart einschaltbar ist, bei der das Ausschub- bzw. Stellaggregat in einem schmalen mittleren Winkelbereich beidseitig seiner in Längsrichtung des Zugfahrzeuges ausgerichteten Mittellage seine eingeschobene bzw. kurze Endlage und außerhalb des genannten Winkelbereiches seine ausgeschobene bzw. lange Endlage bzw. zu den genannten Endlagen benachbarte Lagen einnimmt.

Hier ist also eine diskontinuierliche Steuerung des Ausschubweges vorgesehen, derart, daß innerhalb eines schmalen mittleren Winkelbereiches, d.h. bei zumindest angenäherter Geradeausfahrt, ein enger Abstand zwischen Zugfahrzeug und Anhänger vorliegt, während außerhalb dieses schmalen Winkelbereiches jeweils der maximale Abstand eingestellt wird. Damit wird einerseits der Steuerungsaufwand deutlich vermindert, andererseits wird damit gleichzeitig eine besonders hohe Sicherheit gegen Fehlsteuerung gewährleistet.

Bei dieser Betriebsweise wird berücksichtigt, daß im wesentlichen nur bei Geradeausfahrt ein geringer Abstand zwischen Zugfahrzeug und Anhänger wichtig ist, um trotz großer Ladeflächen von Zugfahrzeug und Anhänger die zulässige maximale Gesamtlänge eines Lastzuges einhalten zu können. Beim Durchfahren von Kurven kommt es dagegen in erster Linie auf eine gute Manövrierfähigkeit bzw. Straßenlage des Lastzuges an. Die Erfüllung dieser Forderungen wird durch die starke Ausschubbewegung des Ausschub- bzw. Stellaggregates begünstigt. Dagegen darf bei den relativ kurzzeitigen Kurvenfahrten eine vergrößerte Gesamtlänge des Lastzuges vorliegen.

Die beschriebene automatische Betriebsweise läßt sich konstruktiv in besonders einfacher Weise verwirklichen, indem das Ausschub- bzw. Stellaggregat oder ein daran angeordnetes oder damit gemeinsam um die zugfahrzeugseitige Hochachse schwenkendes Teil mit einem zugfahrzeugfest angeordneten binären Schalter zusammenwirken, welcher zwischen seinen beiden Schaltzuständen umschaltet, wenn das Ausschub- bzw. Stellaggregat den schmalen mittleren Winkelbereich beiderseits der Mittellängsachse des Zugfahrzeuges verläßt bzw. in diesen Winkelbereich zurückschwenkt.

Dieser Schalter ist bevorzugt als berührungslos arbeitender Näherungsschalter, z.B. als induktiver Näherungsschalter, ausgebildet.

Um unnötige Stellbewegungen des Ausschub- bzw. Stellaggregates zu vermeiden, wenn die Grenzzwinkel des schmalen mittleren Winkelbereiches mehrfach hintereinander geringfügig in der einen oder anderen Richtung überschritten werden, kann vorgesehen sein, daß das Ausschub- bzw. Stellaggregat auf das Umschalten des binären Schalters mit Verzögerung reagiert und/oder daß der binäre Schalter beim Ausschwenken des Ausschub-bzw. Stellaggregates aus dem schmalen mittleren Winkelbereich bei etwas größeren Winkeln umschaltet als beim Zurückschwenken des Ausschub- bzw. Stellaggregates in den mittleren schmalen Winkelbereich.

Weitere Merkmale bevorzugter Ausführungsformen der Erfindung gehen aus den Ansprüchen sowie der nachfolgenden Erläuterung der Zeichnung hervor, in der bevorzugte Varianten der Erfindung in leicht schematisierter Form dargestellt sind.

Dabei zeigt

Fig. 1 eine ausschnittsweise Seitenansicht des erfindungsgemäßen Kurzkupplungssystems,

Fig. 2 eine Draufsicht auf das in Fig. 1 dargestellte System,

Fig. 3 einen Lastzug mit erfindungsgemäßem Kurzkupplungssystem bei Geradeausfahrt und

Fig. 4 bei Kurvenfahrt.

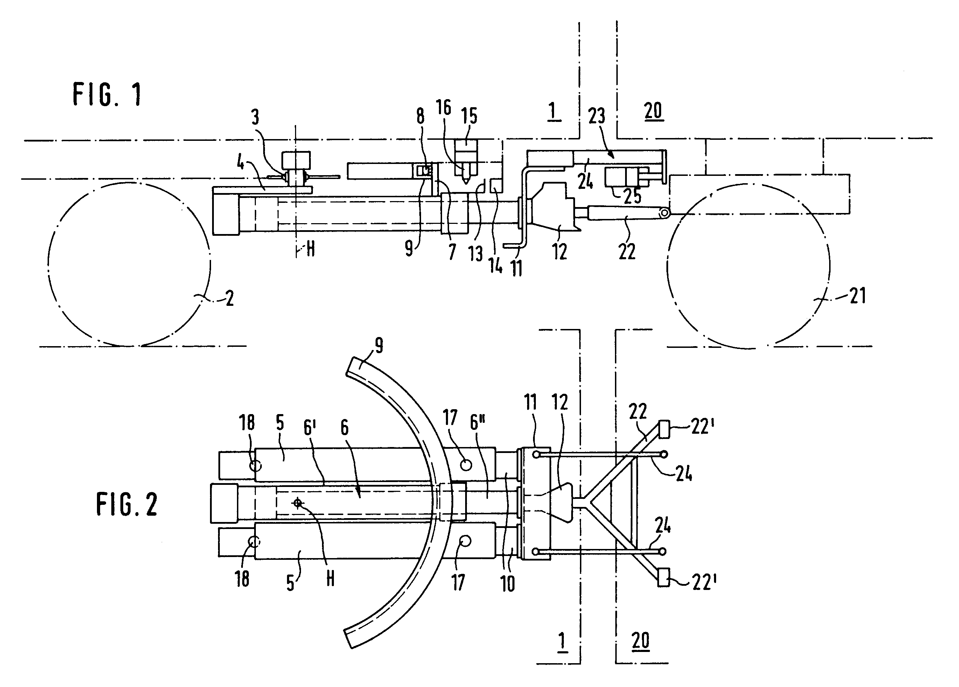

Am Rahmen eines Zugfahrzeuges 1, von dem in der Zeichnung jeweils nur der Heckbereich schematisch dargestellt ist, ist in Fahrzeuglängsrichtung dicht hinter der Hinterachse 2 in Fahrzeugmitte ein Gelenklager 3 mit einer in Richtung einer zugfahrzeugseitigen Hochachse H erstreckten vertikalen Gelenkachse angeordnet. Am Gelenklager 3 sind mittels einer nur in Fig. 1 dargestellten Trägerplatte 4 zwei zueinander parallele Führungsrohre 5 mit vorzugsweise rechteckigen Querschnitten in einer zur Hochachse H radialen Ebene drehbar angeordnet. Die Führungsrohre 5 sind miteinander sowie mit dem Zylinder $6'$ eines zwischen ihnen angeordneten Kolben-Zylinder-Aggregates 6 rahmenartig verbunden.

Der von der Trägerplatte 4, den Führungsrohren 5, und dem Zylinder $6'$ des Kolben-Zylinder-Aggregates 6 gebildete und um die Hochachse H relativ zum Zugfahrzeug 1 schwenkbare Verbund ist mit radialem Abstand von der Hochachse H in Fahrzeuglängsrichtung hinter dem Gelenklager 3 vertikal abgestützt, indem an den Führungsrohren 5 bzw. dem Zylinder $6'$ oder damit verbundenen Teilen nach oben gerichtete vertikale Stützen 7 angeordnet sind, welche mit an ihnen gelenklagerseitig angeordneten Gleit- oder Rollkörpern 8 an einer zentrisch zur Hochachse H am Rahmen des Zugfahrzeuges 1 angeordneten kreisbogenförmigen Führungsschiene 9 geführt sind. Die in einer Radialebene der Hochachse H angeordnete Führungsschiene 9 besitzt dazu beispielsweise U-Profil mit vom Gelenklager 3 abgewandter U-Öffnung.

In den Führungsrohren 5 sind Führungsstangen 10 mit dem Querschnitt der Führungsrohre 5 angepaßtem Querschnitt gleitverschiebbar geführt, d.h. die Führungsrohre 5 sowie die Führungsstangen 10 bilden ein teleskopierbares Aggregat. An ihren vom Gelenklager 3 entfernteren Enden sind die Führungsstangen 10 mittels eines Quergliedes 11, beispielsweise eines Z-Profiles, U-förmig miteinander sowie der Kolbenstange $6''$ des Kolben-Zylinder-Aggregates 6 verbunden. In Verlängerung der Kolbenstange $6''$ ist am Querglied 11 ein Kupplungskopf 12 angeordnet.

Das Kolben-Zylinder-Aggregat 6 ist mit einer nicht dargestellten pneumatischen oder hydraulischen Druckquelle verbunden, welche den doppeltwirkenden Kolben des Kolben-Zylinder-Aggregates 4 wahlweise mit einer Druckdifferenz in der einen und anderen Richtung beaufschlagen kann, um den Kupplungskopf 12 radial zur Hochachse H in den Figuren 1 und 2 nach rechts auszuschieben bzw. nach links einzuziehen. Die Steuerung der Druckquelle bzw. einer zwischen das Kolben-Zylinder-Aggregat 6 und die Druckquelle geschalteten Steuerventilanordnung kann manuell oder automatisch in weiter unten dargestellter Weise erfolgen.

Die Führungsrohre 5 sowie die Führungsstangen 10 können mittels Kolben-Zylinder-Aggregate 15 arretiert werden. Dazu besitzen die mit fahrzeugfesten Zylindern angeordneten Aggregate 15 vertikal verschiebbare Kolben, deren als Riegelschieber ausgebildete Kolbenstangen 16 in damit zusammenwirkende Bohrungen 17 und 18 an den Führungsrohren 5 sowie den Führungsstangen 10 eingeschoben werden können, wenn die Führungsrohre 5 eine zur Längsachse des Zugfahrzeuges 1 parallele Mittellage einnehmen und die Führungsstangen 10 mittels des Kolben-Zylinder-Aggregates 6 derart - in den Figuren nach rechts - ausgefahren werden, daß die Bohrungen 17 und 18 miteinander fluchten. Die damit arretierte Lage des Kupplungskopfes 12 bildet eine Kuppelposition, deren Zweck weiter unten erläutert wird. Im übrigen ist auch eine Arretierung in der in Fig. 2 dargestellten Lage möglich, da die Führungsstangen 10 weitere mit den Bohrungen 17 fluchtende Bohrungen besitzen.

Der Anhänger 20, von dem in der Zeichnung nur jeweils das Vorderteil schematisiert dargestellt ist, besitzt eine lenkbare Vorderachse 21, welche in herkömmlicher Weise an einem um eine Hochachse des Anhängers 5 drehbaren Drehschemel angeordnet sein kann.

Am Drehschemel ist in herkömmlicher Weise eine um eine Querachse desselben schwenkbare Zuggabel 22 angeordnet, deren vorderes Ende nach Einführung in ein Kupplungsmaul des Kupplungskopfes 12 mit demselben gekuppelt werden kann, wobei die Zuggabel relativ zum Kupplungskopf 12 in Seitwärts-und Vertikalrichtung schwenkbar bleibt.

Mittels einer Blockiervorrichtung 23 kann die Zuggabel 22 relativ zum Kupplungskopf 12 vollständig bzw. nahezu seitenunbeweglich festgehalten werden, so daß die Zuggabel 22 relativ zum Kupplungskopf 12 praktisch nur noch um eine horizontale Querachse schwenken kann, welche parallel bzw. nahezu parallel zu der durch die Schwenklager 22′ der Zuggabel 22 festgelegten Querachse verläuft.

Die Blockiervorrichtung 23 kann beispielsweise durch beidseitig oder einseitig des Kupplungskopfes 12 angeordnete Längslenker 24 gebildet werden, deren in Fahrtrichtung vordere Enden seitlich des Kupplungskopfes 12 am Querglied 11 angelenkt sind und deren anhängerseitige Enden seitlich der Längsachse der Zuggabel 22 an der Zuggabel 22 oder einem damit verbundenen Teil, beispielsweise an dem die Vorderachse 21 des Anhängers 20 tragenden Drehschemel, im wesentlichen längsunbeweglich festgelegt sind. Bei der in Fig. 1 schematisch dargestellten Ausführungsform sind die anhängeseitigen Enden der Längslenker 24 mit dem Drehschemel der Vorderachse 21 über zwischengeschaltete Kolben-Zylinder-Aggregate verbindbar, welche einerseits eine Anpassung der Längslenker 24 an die Längenabmessung der Zuggabel 22 zulassen und andererseits durch Absperrung der Kolbenkammern auf beiden Seiten des Kolbens die Blockierung der Zuggabel 22 gegen Seitwärtsbewegung relativ zum Kupplungskopf 12 ermöglichen. Gegebenenfalls kann die Absperrung der Kolbenkammern der Kolben-Zylinder-Aggregate 25 mit Ventilen erfolgen, die den Druck in den Kolbenkammern der Aggregate 25 begrenzen, um eine Überlastung der Längslenker 24 zu verhindern.

Wenn die Zuggabel 22 mittels der Blockiervorrichtung 23 an Seitwärtsbewegungen relativ zum Kupplungskopf 12 gehindert wird, so bildet die Zuggabel 22 in Draufsicht eine im wesentlichen geradlinige Verlängerung des Kolben-Zylinder-Aggregates 6, wobei das Aggregat 6 und die Zuggabel 22 eine durch Aus-bzw. Einfahren des Kolben-Zylinder-Aggregates 6 verlängerbare und am Gelenklager 3 um die Hochachse H schwenkbare Einheit bzw. Zugverbindung zwischen dem Zugfahrzeug 1 und dem Anhänger 20 darstellen.

Das oben dargestellte Kurzkupplungssystem funktioniert im wesentlichen wie folgt:
Bei einer normalen Straßenfahrt des durch das Zugfahrzeug 1 und den Anhänger 20 gebildeten Lastzuges ist die Blockiervorrichtung 23 in ihrem blockierenden Zustand, so daß die mit dem Kupplungskopf 12 gekuppelte Zuggabel 22 relativ zum Kupplungskopf 12 seitenunbeweglich festgehalten wird und eine geradlinige Verlängerung des Kolben-Zylinder-Aggregates 6 bildet.

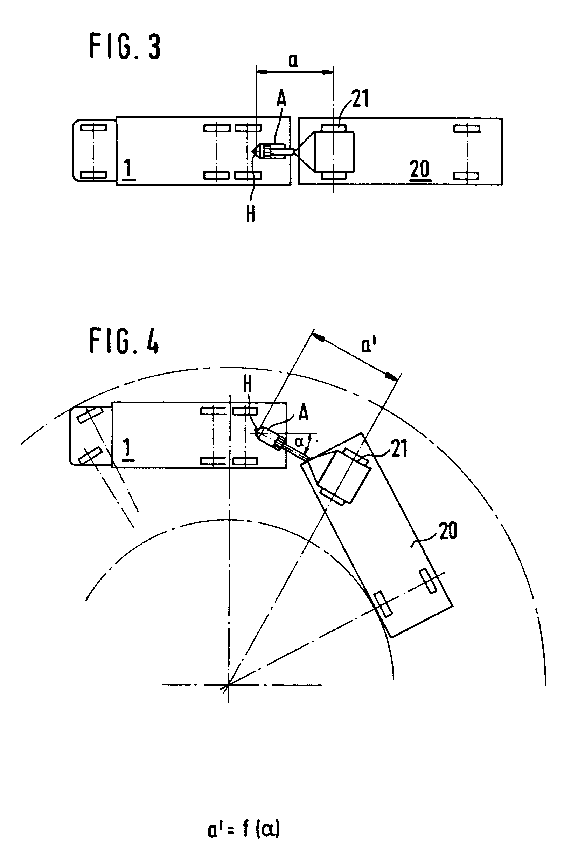

Bei Geradeausfahrt soll zwischen Zugfahrzeug 1 und Anhänger 20 gemäß Fig. 3 ein besonders geringer Abstand vorliegen, um zu vermeiden, daß die Gesamtlänge des Lastzuges eine von der Straßenverkehrsordnung vorgegebene zulässige Gesamtlänge überschreitet. Dieser Abstand ist derart gering, daß der Lastzug nur begrenzt kurventauglich ist. Deshalb muß für das Durchfahren engerer Kurven der relativ geringe Abstand a in Fig. 3 zwischen der Hochachse H und der Vorderachse 21 des Anhängers gemäß Fig. 4 auf ein größeres Maß a′ vergrößert werden, um Kollisionen zwischen dem Zugfahrzeug 1 und dem Anhänger 20 zu vermeiden.

Gemäß einer besonders bevorzugten Ausführungsform der Erfindung ist nun vorgesehen, daß das Ausschub- bzw. Stellaggregat 5 bis 11 der Kupplung 12 in seiner in Längsrichtung des Zugfahrzeuges 1 ausgerichteten Mittellage sowie einem schmalen mittleren Winkelbereich beidseitig dieser Mittellage seinen vollständig zusammengeschobenen Zustand einnimmt, um den Anhänger 20 mit geringstmöglichem Abstand hinter dem Zugfahrzeug 1 zu führen.

Sobald das Ausschub- bzw. Stellaggregat 5 bis 11 den genannten schmalen Winkelbereich verläßt, wird es vollständig ausgeschoben, so daß der Anhänger 20 dem Zugfahrzeug 1 mit entsprechend großem Abstand folgt.

Auf diese Weise wird also erreicht, daß Zugfahrzeug 1 und Anhänger 2 auf Autobahnen und Schnellstraßen, die in der Regel nur Kurven mit sehr großen Kurvenradien aufweisen, immer dicht hinter dem Zugfahrzeug 1 verbleibt. Sobald engere Kurven durchfahren werden müssen, steht zwischen Zugfahrzeug 1 und Anhänger 2 ein sehr großer Abstand zur Verfügung, welcher jegliche Kollisionsgefahr verhindert.

Die dargestellte Betriebsweise läßt sich steuerungstechnisch besonders einfach verwirklichen.

In der in Längsrichtung des Zugfahrzeuges 1 ausgerichteten Mittellage wirkt das Ausschub- bzw. Stellaggregat 5 bis 11 der Kupplung 12 mittels eines an ihm angeordneten Fortsatzes 13 berührungslos mit einem Näherungsschalter 14 zusammen, welcher in Fahrzeugmitte am Zugfahrzeug 1 rahmenfest angeordnet ist. Der beispielsweise induktive Näherungsschalter 14 ist als binärer Schalter ausgebildet und nimmt bei geringem Abstand zwischen dem Fortsatz 13 und dem Schalter 14 seinen einen Schaltzustand ein, welcher der zusammengeschobenen Lage des Ausschub- bzw. Stellaggregates 5 bis 11 zugeordnet ist.

Sobald der Abstand zwischen Fortsatz 13 und Schalter 14 vergrößert wird, d.h. sobald das Ausschub- bzw. Stellaggregat 5 bis 11 den schmalen Winkelbereich beidseitig seiner Mittellage verläßt, schaltet der Schalter 14 in seinen anderen Schaltzustand um, welcher der vollständig ausgeschobenen Stellung des Ausschub- bzw. Stellaggregates 5 bis 11 zugeordnet ist.

Der Schalter 14 ist zweckmäßig mit dem Eingang einer nicht dargestellten Steuerschaltung verbunden, welche das Teleskopaggregat 6 bzw. die zugehörige Druckquelle sowie Steuerventile zwischen Teleskopaggregat 6 und Druckquelle betätigt. Die Steuerschaltung ist darüber hinaus mit Sensoren bzw. Istwertgebern verbunden, welche die Betriebszustände des Druckmittelsystems sowie die tatsächlichen Bewegungen bzw. Stellungen des Kolben-Zylinder-Aggregates 6 bzw. des Ausschub-bzw. Stellaggregates 5 bis 11 ermitteln, so daß die Steuervorrichtung "erkennen" kann, ob das Kurzkupplungssystem fehlerfrei arbeitet.

Darber hinaus kann die Steuerschaltung in der Fahrerkabine angeordnete Anzeigen steuern, die die jeweiligen Stellungen bzw. Bewegungen des Ausschub- bzw. Stellaggregates 5 bis 7 für den Fahrer sichtbar anzeigen bzw. bei Betriebsstörungen ein Fehlersignal erzeugen, um den Fahrer zum Anhalten aufzufordern.

Das Kolben-Zylinder-Aggregat 6 kann hydraulisch oder pneumatisch arbeiten. Hydraulische Aggregate besitzen den Vorzug, daß auch bei kleinen Querschnitten vergleichsweise große Stellkräfte erzeugbar sind, d.h. für ein hydraulisches Kolben-Zylinder-Aggregat 6 wird nur wenig Raum benötigt. Ein pneumatisches Kolben-Zylinder-Aggregat 6 benötigt dagegen in der Regel mehr Platz. Aufgrund der Volumenelastizität des Druckmediums besitzt ein Pneumatik-Aggregat den Vorteil, daß der Kupplungskopf 12 ohne zusätzlichen konstruktiven Aufwand bei starken Stößen nachgeben kann.

Zur Erzeugung des hydraulischen bzw. pneumatischen Druckes sind eine Pumpe bzw. ein Kompressor angeordnet. Der Antrieb derselben erfolgt mittels des Motors des Zugfahrzeuges oder durch gesonderte, beispielsweise elektrische Servomotoren.

Damit bei allen Betriebszuständen immer ein konstanter bzw. nahezu konstanter Druck und insbesondere auch ein konstanter hoher Anfangsdruck zur Verfügung stehen, ist dem Kompressor bzw. der Pumpe noch ein Druckspeicher zugeschaltet, welcher vom Kompressor bzw. der Pumpe ständig in aufgeladenem Zustand gehalten wird.

Um unnötige Stellbewegungen des Ausschub-bzw. Stellaggregates 5 bis 11 zu vermeiden, wenn die Grenzen des schmalen mittleren Winkelbereiches (z.B. ± 3° bezüglich der Fahrzeuglängsachse) bei Schwenkbewegungen des Ausschub- bzw. Stellaggregates 5 bis 11 mehrfach hintereinander in der einen oder anderen Richtung überschritten werden, genügt es, wenn das Ausschub- bzw. Stellaggregat mit geringer Verzögerung auf das Umschalten des Schalters 14 reagiert. Zusätzlich oder alternativ kann vorgesehen sein, daß der Schalter 14 bei einem geringfügig größeren Grenzwinkel umschaltet, wenn sich das Ausschub- bzw. Stellaggregat 5 bis 11 bei einer Schwenkung von seiner Mittellage entfernt. Wenn sich das Ausschub- bzw. Stellaggregat 5 bis 11 bei einer Schwenkung seiner Mittellage annähert, so schaltet der Schalter 14 dagegen bei einem etwas kleineren Grenzwinkel um.

Falls der Anhänger 20 eine sehr lange Zuggabel 22 besitzt, verbleibt zwischen Zugfahrzeug 1 und Anhänger 20 immer ein recht großer Mindestabstand. In diesem Falle besteht die Möglichkeit, die Zuggabel 22 wie bei einem herkömmlichen Lastzug relativ zum Kupplungskopf 12 auch in Seitwärtsrichtung beweglich zu lassen, d.h. keine Blockiervorrichtung 23 vorzusehen bzw. die Blockiervorrichtung 23 unwirksam zu lassen. Gleichzeitig wird dann der Kupplungskopf 12 in der in Fig. 2 dargestellten Lage arretiert, indem die Kolbenstangen 16 (vgl. Fig. 1) der Kolben-Zylinder-Aggregate 15 in die Bohrungen 17 der Führungsrohre 5 sowie mit diesen Bohrungen 17 fluchtende Bohrungen in den Führungsstangen 10 eingeschoben werden, wodurch die Führungsrohre 5 und die Führungsstangen 10 unschwenkbar und unverschiebbar in der in Fig. 2 dargestellten Stellung arretiert sind. Damit wird der Kupplungskopf 12 wie bei einem herkömmlichen Zugfahrzeug 1 am Fahrzeugheck in der Mitte festgehalten. Aufgrund der langen Zuggabel 22 können bei Kurvenfahrt keine Kollisionen zwischen Zugfahrzeug 1 und Anhänger 20 auftreten.

Zum Ankuppeln eines Anhängers 20 wird der Kupplungskopf 12 in eine Sonder- bzw. Kuppelstellung gebracht, bei der das in Mittellage befindliche und damit parallel zur Längsachse des Zugfahrzeuges 1 erstreckte Ausschub- bzw. Stellaggregat 5 bis 11 derart weit ausgeschoben ist, daß die Bohrungen 17 der Führungsrohre 5 mit den Bohrungen 18 der Führungsstangen 10 fluchten und der Kupplungskopf 12 zugfahrzeugfest arretiert ist, indem die Kolbenstangen 10 in die miteinander fluchtenden Bohrungen 17 und 18 eingeschoben sind. Sodann wird das Zugfahrzeug 1 langsam nach rückwärts in den Bereich der Zuggabel 22 des anzukuppelnden Anhängers 20 gefahren, bis die Zuggabel 22 in das Maul des Kupplungskopfes 12 eingekuppelt werden kann. Falls danach die Zuggabel 22 bereits geradlinig zum Ausschub- bzw. Stellaggregat 5 bis 11 steht, kann die Blockiervorrichtung 23 gegebenenfalls sofort wirksam gemacht werden. Andernfalls führt der Lastzug ein kurzes Stück vorwärts, bis die Zuggabel 22 eine geradlinige Verlängerung des Ausschub- bzw. Stellaggregates 5 bis 11 bildet, um die Blockiervorrichtung 23 wirksam stellen zu können. Vor der nachfolgenden Weiterfahrt des Lastzuges in Vorwärtsrichtung werden dann die Kolbenstangen 16 aus den Bohrungen 17 und 18 herausgehoben, so daß nachfolgend die oben beschriebene automatische Steuerung des Ausschub- bzw. Stellaggregates 5 bis 11 für normale Straßenfahrt erfolgen kann.

Grundsätzlich kann das Ausschub- bzw. Stellaggregat 5 bis 11 auch in anderer Weise gesteuert werden. Beispielsweise ist es prinzipiell möglich, den Ausschubweg kontinuierlich mit dem Winkel $\alpha$, (vgl. Fig. 4) anwachsen zu lassen, um den das Ausschub- bzw. Stellaggregat bei Kurvenfahrt jeweils um die Hochachse H schwenkt. In diesem Falle werden Geber benötigt, die die jeweilige Winkelstellung des Ausschub-bzw. Stellaggregates wiedergeben.

Darber hinaus können auch beispielsweise im Bereich der hinteren Ecken des Zugfahrzeuges 1 Entfernungsmesser angeordnet sein, die drahtlos - z.B. mit elektromagnetischen Strahlen oder mittels Ultraschallwellen - die Entfernung der vorderen Ecken des Anhängers 20 abtasten bzw. die Entfernung von an den Ecken des Anhängers angeordneten Reflektoren od.dgl. ermitteln.

Abweichend von der oben beschriebenen Ausführungsform kann der Anhänger 20 auf einer einzigen unlenkbaren Achse oder Doppelachse laufen. In diesem Falle ist die Zuggabel 22 starr mit dem Anhänger 20 verbunden. Auch hier ist die Erfindung ohne weiteres einsetzbar, d.h. an den oben beschriebenen Funktionsabläufen ändert sich nichts.

## Patentansprüche

1. Kurzkupplungssystem für einen aus Zugfahrzeug (1) und Anhänger (20) bestehenden Lastzug, mit

- einer zum Ankuppeln des Anhängers (20) dienenden zugfahrzeugseitigen Kupplungsanordnung (12), welche an einem um eine zugfahrzeugfeste Hochachse (H) schwenkbaren Ausschub- bzw. Stellaggregat (A; 5 bis 11) mit zur Hochachse (H) radialem Stellweg gehaltert ist und vom Ausschub- bzw. Stellaggregat (A; 5 bis 11) bei Auslenkung aus einer fahrzeugmittigen Lage unter Vergrößerung des Abstandes zur Hochachse (H) ausgeschoben wird, sowie

- einer in die Kupplungsanordnung (12) lösbar einkuppelbaren anhängerseitigen Zuggestängeanordnung (22), welche in einer Mittellage relativ zur Kupplungsanordnung (12) seitenunbeweglich bzw. ohne Schwenkbeweglichkeit in Seitwärtsrichtung arretierbar ist,
  dadurch gekennzeichnet, daß

- das Ausschub- bzw. Stellaggregat (A; 5 bis 11) motorisch angetrieben ist, wobei der Motorantrieb von einem Geber (14) in Abhängigkeit von der Auslenkung direkt oder indirekt gesteuert wird, und

- das Ausschub- bzw. Stellaggregat (A; 5 bis 11) eine arretierbare Kuppel- bzw. Sonderposition besitzt, in der das Ausschub- bzw. Stellaggregat (A; 5 bis 11) in seiner Mittellage und die Kupplungsanordnung (12) in einer relativ zum Zugfahrzeug (1) nach rückwärts verschobenen Lage zugfahrzeugfest arretiert sind.

2. Kurzkupplungssystem für einen aus Zugfahrzeug (1) und Anhänger (20) bestehenden Lastzug, mit

- einer zum Ankuppeln des Anhängers (20) dienenden zugfahrzeugseitigen Kupplungsanordnung (12), welche an einem um eine zugfahrzeugfeste Hochachse (H) schwenkbaren Ausschub- bzw. Stellaggregat (A; 5 bis 11) mit zur Hochachse (H) radialem Stellweg gehaltert ist und vom Ausschub- bzw. Stellaggregat (A; 5 bis 11) bei Auslenkung aus einer fahrzeugmittigen Lage unter Vergrößerung des Abstandes zur Hochachse (H) ausgeschoben wird, sowie

- einer in die Kupplungsanordnung (12) lösbar einkuppelbaren anhängerseitigen Zuggestängeanordnung (22), welche in einer Mittellage relativ zur Kupplungsanordnung (12) seitenunbeweglich bzw. ohne Schwenkbeweglichkeit in Seitwärtsrichtung arretierbar ist, insbesondere nach Anspruch 1,
  dadurch gekennzeichnet, daß
- das Ausschub- bzw. Stellaggregat (A; 5 bis 11) motorisch angetrieben ist, wobei der Motorantrieb von einem Geber (14) in Abhängigkeit von der Auslenkung direkt oder indirekt gesteuert wird, und
- für normale Straßenfahrt eine automatische Betriebsart einschaltbar ist, bei der das Ausschub- bzw. Stellaggregat (A; 5 bis 11) in einem schmalen mittleren Winkelbereich beidseitig seiner in Längsrichtung des Zugfahrzeuges (1) ausgerichteten Mittellage seine eingeschobene bzw. kurze Endlage und außerhalb des genannten Winkelbereiches seine ausgeschobene bzw. lange Endlage bzw. zu den genannten Endlagen benachbarte Lagen einnimmt.

3. Kurzkupplungssystem nach Anspruch 2,
   dadurch gekennzeichnet, daß das Ausschub- bzw. Stellaggregat (A; 5 bis 11) bzw. ein daran angeordnetes oder damit gemeinsam um die Hochachse (H) schwenkendes Teil mit einem zugfahrzeugfest angeordneten binären Schalter (14) zusammenwirkt, welcher zwischen seinen beiden Schaltzuständen umschaltet, wenn das Ausschub- bzw. Stellaggregat (A; 5 bis 11) den schmalen mittleren Winkelbereich beiderseits der Mittellängsachse des Zugfahrzeuges (1) verläßt bzw. in diesen Winkelbereich zurückschwenkt, und welcher bevorzugt als berührungslos arbeitender Näherungsschalter, z.B. als induktiver Näherungsschalter, ausgebildet ist.

4. Kurzkupplungssystem nach einem der Ansprüche 2 oder 3,
   dadurch gekennzeichnet, daß das Ausschub- bzw. Stellaggregat (A; 5 bis 11) auf das Umschalten des binären Schalters (14) mit Verzögerung reagiert und/oder daß der binäre Schalter (14) beim Ausschwenken des Ausschub- bzw. Stellaggregates (A; 5 bis 11) aus dem schmalen mittleren Winkelbereich bei etwas größeren Winkeln umschaltet als beim Zurückschwenken des Ausschub-bzw. Stellaggregates (A; 5 bis 11) in den mittleren Winkelbereich.

5. Kurzkupplungssystem nach einem der Ansprüche 1 bis 4,
   dadurch gekennzeichnet, daß die Kupplungsanordnung (12) an einer um die zugfahrzeugseitige Hochachse (H) schwenkbaren Linearführung (5,10) radial zur Hochachse (H) geführt und mittels eines um die Hochachse (H) schwenkbaren Kolben-Zylinder-Aggregates (6) in entgegengesetzten Richtungen verstellbar ist, welches eingangsseitig bei Hydraulikbetrieb mit einer Pumpe bzw. bei Pneumatikbetrieb mit einem Kompressor sowie mit einem von der Pumpe bzw. dem Kompressor aufladbaren Druckspeicher verbunden ist, welcher bei allen Betriebssphasen vom Kompressor bzw. von der Pumpe auf einem konstanten bzw. nahezu konstant bleibenden Druck gehalten wird.

6. Kurzkupplungssystem nach einem der Ansprüche 1 bis 5,
   dadurch gekennzeichnet, daß die Kupplungsanordnung (12) an zwei parallelen, kupplungsseitig miteinander U-förmig verbundenen Führungsstangen (10) angeordnet ist, die in Führungsrohren (5) teleskopartig verschiebbar aufgenommen sind, welche ihrerseits um die zugfahrzeugseitige Hochachse (H) schwenkbar gelagert sind.

7. Kurzkupplungssystem nach einem der Ansprüche 1 bis 6,
   dadurch gekennzeichnet, daß das Kolben-Zylinder-Aggregat (6) zwischen den Führungsstangen (10) und Rohren (5) angeordnet und einerseits mit der U-förmigen Verbindung (Querglied 11) der Führungsstangen (10) und andererseits mit einer hochachsenseitigen Halterung (Trägerplatte 4) der Führungsrohre (5) bzw. einem damit verbundenen Teil gekoppelt ist.

8. Kurzkupplungssystem nach einem der Ansprüche 1 bis 7,
   dadurch gekennzeichnet, daß das Ausschub- bzw. Stellaggregat (4 bis 11;A) in allen Schwenklagen mit Abstand von der zugfahrzeugseitigen Hochachse (H) am Zugfahrzeug (1) vertikal abgestützt ist, vorzugsweise indem am Zugfahrzeug (1) zentrisch zur zugfahrzeugseitigen Hochachse (H) eine kreisbogenförmige Führungsschiene (9) angeordnet ist, auf bzw. in der am Ausschub- bzw. Stellaggregat (4 bis 11;A) angeordnete Führungselemente (7,8) laufen und nach oben sowie unten abgestützt sind.

9. Kurzkupplungssystem nach einem der Ansprüche 1 bis 8,
dadurch gekennzeichnet, daß am Zugfahrzeug (1) als Arretierorgane für das Ausschub- bzw. Stellaggregat (4 bis 11;A) bzw. die Kupplungsanordnung (12) vertikal bewegliche Riegelschieber (Kolbenstangen 16) angeordnet sind, welche in der arretierten Mittellage bzw. der arretierten Kuppelposition miteinander fluchtende Öffnungen (17,18) in den Führungsstangen (10) und -rohren (5) durchsetzen.

10. Kurzkupplungssystem nach einem der Ansprüche 1 bis 9,
dadurch gekennzeichnet, daß die Riegelschieber als Kolbenstangen (16) von Kolben-Zylinder-Aggregaten (15) mit zugfahrzeugfesten Zylindern angeordnet bzw. ausgebildet sind.

11. Kurzkupplungssystem nach einem der Ansprüche 1 bis 10,
dadurch gekennzeichnet, daß Entfernungsmesser angeordnet sind, welche die Abstände zwischen Zugfahrzeug (1) und Anhänger (20) wiedergebende Signale erzeugen, insbesondere solche, die den Abständen zwischen benachbarten - rechten oder linken - Fahrzeugecken von Zugfahrzeug (1) und Anhänger (20) entsprechen.

**Claims**

1. Short coupling system for a trailer train comprising a tractor vehicle (1) and a trailer (20), comprising
    - a coupling arrangement (12) on the tractor vehicle side, serving for the coupling on of the trailer (20), the coupling arrangement being held on an extension or adjustment unit (A; 5 to 11) pivotable about a vertical axis (H) fixed relative to the tractor vehicle, with a radial adjustment stroke relative to the vertical axis (H) and being extended, on pivoting, by the extension or adjustment unit out of a centre position with respect to the vehicle, with increase of the distance from the vertical axis (H), and
    - a draw linkage arrangement (22) on the trailer side, which can be releasably coupled into the coupling arrangement (12), and which can be latched in a central position without possibility of lateral displacement, or pivotal displacement in the lateral direction with respect to the coupling arrangement (12), characterised in that
    - the extension or adjustment unit (A; 5 to 11) is motor-driven, the motor drive being directly or indirectly controlled by a transmitter (14) as a function of the pivoting, and
    - the extension or adjustment unit (A; 5 to 11) has a latchable coupling position or special position in which the extension or adjustment unit (A; 5 to 11) is fixedly latched relative to the tractor vehicle in its center position and the coupling arrangement (12) is fixedly latched relative to the tractor vehicle in a rearwardly displaced position relative to the tractor vehicle (1).

2. Short coupling system for a trailer train comprising a tractor vehicle (1) and a trailer (20), comprising
    - a coupling arrangement (12) on the tractor vehicle side, serving for the coupling on of the trailer (20), the coupling arrangement being held on an extension or adjustment unit (A; 5 to 11) pivotable about a vertical axis (H) fixed relative to the tractor vehicle, with a radial adjustment stroke relative to the vertical axis (H) and being extended, on pivoting, by the extension or adjustment unit out of a centre position with respect to the vehicle, with increase of the distance from the vertical axis (H), and
    - a draw linkage arrangement (22) on the trailer side, which can be releasably coupled into the coupling arrangement (12), and which can be latched in a central position without possibility of lateral displacement, or pivotal displacement in the lateral direction with respect to the coupling arrangement (12), in particular in accordance with claim 1, characterised in that
    - the extension or adjustment unit (A; 5 to 11) is motor-driven, the motor drive being directly or indirectly controlled by a transmitter (14) as a function of the pivoting, and
    - for normal road travel, an automatic operating mode is provided in which the extension or adjustment unit (A; 5 to 11) adopts its retracted or short end position within a narrow central angular range on both sides of its center position aligned with the longitudinal direction of the tractor vehicle (1) and adopts its extended or long end position, or positions proximate to said end positions, outside of said angular range.

3. Short coupling system according to claim 2, characterised in that the extension or adjustment unit (A; 5 to 11), or a part mounted thereon, or else a part jointly pivotable therewith about the vertical axis (H) cooperates with a binary switch (14) fixedly arranged relative to the tractor vehicle, said switch changing over between its two switch conditions when the extension or adjustment unit (A; 5 to 11) leaves the narrow central angular range on both sides of the center longitudinal axis of the tractor vehicle (1) and pivots back into this angular range respectively, and being preferably realised as a proximity switch operating without contact, for example as an inductive proximity switch.

4. Short coupling system according to either claim 2 or 3, characterised in that the extension or adjustment unit (A; 5 to 11) reacts with delay to the change over of the binary switch (14); and/or in that on pivoting of the extension or adjustment unit (A; 5 to 11) out of the narrow central angular range the binary switch (14) changes over at somewhat larger angles than on pivoting of the extension or adjustment unit (A; 5 to 11) back into the central angular range.

5. Short coupling system according to one of the claims 1 to 4, characterised in that the coupling arrangement (12) is guided radially with respect to the vertical axis (H) on a linear guide (5, 10) pivotable about the vertical axis fixed relative to the tractor vehicle, and can be displaced in opposite directions by means of a piston and cylinder unit (6) which is pivotable about the vertical axis (H) and is connected at the inlet side to a pump in the case of hydraulic operation or to a compressor in the case of pneumatic operation and to a pressure reservoir which can be charged by the pump or the compressor, the pressure reservoir being maintained by the pump or the compressor at a constant pressure or a pressure remaining approximately constant in all operating phases.

6. Short coupling system according to one of the claims 1 to 5, characterised in that the coupling arrangement (12) is arranged on two parallel guide rods (10) mutually connected in a U-shape on the coupling side and telescopically displaceably received in guide tubes (5) which are in turn pivotally mounted about the vertical axis (H) at the tractor vehicle side.

7. Short coupling system according to one of the claims 1 to 6, characterised in that the piston and cylinder unit (6) is arranged between the guide rods (10) and tubes (5) and is coupled on the one hand to the U-shaped connection (transverse member 11) of the guide rods (10) and on the other hand to an attachment (carrier plate 4) of the guide tubes (5) on the vertical axis side, or to a part connected to these guide tubes.

8. Short coupling system according to one of the claims 1 to 4, characterised in that the extension or adjustment unit (4 to 11; A) is vertically supported on the tractor vehicle (1) in all pivoting positions at a distance from the vertical axis on the tractor vehicle side, preferably in that a guide rail (9) having the shape of a circular arc is arranged on the tractor vehicle (1) centrally relative to the vertical axis (H) on the tractor vehicle side, with guide elements (7, 8) arranged on the extension or adjustment unit (4, 11; A) running and being supported at the top and at the bottom on or in said guide rail.

9. Short coupling system according to one of the claims 1 to 8, characterised in that vertically movable bolts (piston rods 16) are arranged on the tractor vehicle (1) as locking members for the extension or adjustment unit (4, 11; A) or for the coupling arrangement (12), said bolts passing, in the locked center position or the locked coupling position, through mutually aligned openings (17, 18) in the guide rods (10) and tubes (5).

10. Short coupling system according to one of the claims 1 to 9, characterised in that the bolts are arranged or realised as piston rods (16) of piston and cylinder units (15) having cylinders fixed relative to the tractor vehicle.

11. Short coupling system according to one of the claims 1 to 10, characterised in that distance sensors are provided which generate signals reproducing the distances between the tractor vehicle (1) and the trailer (20), in particular such signals which correspond to the distances between neighbouring - right or left - corners of the tractor vehicle (1) and of the trailer (20).

**Revendications**

1. Système d'attelage court pour train routier composé d'un véhicule tracteur (1) et d'une remorque (20), comprenant:
   - un dispositif d'attelage (12) situé côté véhicule tracteur et servant à l'attelage de la remorque (20), ce dispositif d'attelage étant supporté sur une unité d'extension ou de réglage (A; 5 à 11) pivotable autour d'un axe vertical (H) fixe par rapport au véhicule tracteur, avec une course de réglage radiale par rapport à l'axe vertical (H), et étant amené en extension avec augmentation de la distance par rapport à l'axe vertical (H) par l'unité d'extension ou de réglage (A; 5 à 11) lors d'un braquage hors d'une position centrale par rapport au véhicule, et

- un agencement de bielles de traction (22), côté remorque, qui peut être accouplé de manière libérable au dispositif d'attelage (12), ledit agencement de bielles de traction pouvant être bloqué dans une position médiane sans possibilité de déplacement latéral, ou sans possibilité de déplacement en rotation en direction latérale par rapport au dispositif d'attelage (12),
caractérisé en ce que

- l'unité d'extension et de réglage (A; 5 à 11) est entraînée par moteur, ledit entraînement à moteur étant commandé directement ou indirectement en fonction du braquage par un émetteur (14), et

- l'unité d'extension et de réglage (A; 5 à 11) possède une position de blocage, ou position spéciale, dans laquelle l'unité d'extension et de réglage (A; 5 à 11) est bloquée fixement par rapport au véhicule tracteur dans sa position médiane, et le dispositif d'attelage (12) est bloqué fixement par rapport au véhicule tracteur dans une position déplacée vers l'arrière par rapport au véhicule tracteur (1).

2. Système d'attelage court pour train routier composé d'un véhicule tracteur (1) et d'une remorque (20), comprenant:

- un dispositif d'attelage (12) situé côté véhicule tracteur et servant à l'attelage de la remorque (20), ce dispositif d'attelage étant supporté sur une unité d'extension ou de réglage (A; 5 à 11) pivotable autour d'un axe vertical (H) fixe par rapport au véhicule tracteur, avec une course de réglage radiale par rapport à l'axe vertical (H), et étant amené en extension avec augmentation de la distance par rapport à l'axe vertical (H) par l'unité d'extension ou de réglage (A; 5 à 11) lors d'un braquage hors d'une position centrale par rapport au véhicule, et

- un agencement de bielles de traction (22), côté remorque, qui peut être accouplé de manière libérable au dispositif d'attelage (12), ledit agencement de bielles de traction pouvant être bloqué dans une position médiane par rapport au dispositif d'attelage (12) sans possibilité de déplacement latéral, ou sans possibilité de basculer en direction latérale, notamment selon la revendication 1,
caractérisé en ce que

- l'unité d'extension et de réglage (A; 5 à 11) est entraînée par moteur, ledit entraînement à moteur étant commandé directement ou indirectement en fonction du braquage par un émetteur (14), et

- pour un déplacement normal sur route peut être enclenché un mode de fonctionnement automatique, dans lequel l'unité d'extension ou de réglage (A; 5 à 11) prend sa position finale rétractée ou courte dans une plage angulaire étroite de part et d'autre de la position médiane alignée avec la direction longitudinale du véhicule tracteur (1), et prend sa position finale en extension ou longue, ou des positions voisines desdites positions finales à l'extérieur de ladite plage angulaire.

3. Système d'attelage court selon la revendication 2, caractérisé en ce que l'unité d'extension ou de réglage (A; 5 à 11), ou une pièce montée sur elle, ou encore une pièce basculant conjointement avec elle autour de l'axe vertical (H), coopère avec un commutateur binaire (14) agencé fixement par rapport au véhicule tracteur, ledit commutateur basculant entre ses deux positions de commutation lorsque l'unité d'extension ou de réglage (A; 5 à 11) quitte la plage angulaire centrale étroite de part et d'autre de l'axe longitudinal médian du véhicule tracteur (1) ou revient dans cette plage angulaire, et ledit commutateur étant de préférence réalisé sous forme de commutateur de proximité agissant sans contact, par exemple un commutateur de proximité inductif.

4. Système d'attelage court selon l'une des revendications 2 ou 3, caractérisé en ce que l'unité d'extension ou de réglage (A; 5 à 11) réagit avec retard au basculement du commutateur binaire (14) et/ou en ce que lors du pivotement de l'unité d'extension ou de réglage (A; 5 à 11) hors de la plage angulaire centrale étroite le commutateur binaire (14) bascule pour des angles sensiblement plus élevés que lors du pivotement de l'unité d'extension ou de réglage (A; 5 à 11) en retour dans la plage angulaire centrale étroite.

5. Système d'attelage court selon l'une des revendications 1 à 4, caractérisé en ce que le dispositif d'attelage (12) est guidé radialement par rapport à l'axe vertical (H) fixe par rapport au véhicule tracteur sur un guidage linéaire (5, 10) pivotant autour de l'axe vertical (H) et peut être déplacé en directions opposées au moyen d'un ensemble à piston et cylindre (6) pivotable autour de l'axe vertical (H), ledit ensemble à piston et cylindre étant relié côté entrée à une pompe et à un réservoir de pression rechargeable par la pompe dans le cas d'un fonctionnement hydraulique, ou à un compresseur et à un réservoir de pression rechargeable par le compresseur dans le cas d'un fonctionnement pneumatique, le réservoir de pression étant maintenu par la pompe ou le compresseur à une pression constante ou une pression demeurant pratiquement constante dans toutes les phases du fonctionnement.

6. Système d'attelage court selon l'une des revendications 1 à 5, caractérisé en ce que le dispositif d'attelage (12) est agencé sur deux tiges de guidage (10) parallèles et reliées l'une à l'autre côté attelage en formant un U, lesdites tiges de guidage étant reçues en déplacement de manière télescopique dans des tubes de guidage (5) qui sont à leur tour montés pivotants autour de l'axe vertical (H).

7. Système d'attelage court selon l'une des revendications 1 à 6, caractérisé en ce que l'ensemble à piston et cylindre (6) est agencé entre les tiges (10) et les tubes (5) de guidage et est accouplé d'une part avec la liaison en forme de U (élément transversal 11) des tiges de guidage (10) et d'autre part avec un support (plaque de support 4) des tubes de guidage (5) situé du côté de l'axe vertical, ou avec une pièce reliée à ces tubes de guidage.

8. Système d'attelage court selon l'une des revendications 1 à 7, caractérisé en ce que l'unité d'extension ou de réglage (4 à 11; A) est supportée verticalement sur le véhicule tracteur et à distance de l'axe vertical (H) situé du côté du véhicule tracteur, dans toutes les positions de pivotement, de préférence par le fait qu'un rail de guidage (9) en forme d'arc de cercle en agencé de façon centrale par rapport à l'axe vertical (H) situé du côté du véhicule tracteur, et des éléments de guidage (7, 8) agencés sur l'unité d'extension ou de réglage (4 à 11; A) se déplacent, en étant supportés par le haut et par le bas, sur ou dans ledit rail de guidage.

9. Système d'attelage court selon l'une des revendications 1 à 8, caractérisé en ce que des coulisseaux de verrouillage (tiges de piston 16) mobiles verticalement sont agencés sur le véhicule tracteur (1) en tant qu'organes de blocage pour l'unité d'extension ou de réglage (4 à 11; A), ou pour le dispositif d'attelage (12), lesdits coulisseaux de verrouillage traversant, dans la position centrale bloquée ou dans les positions d'accouplement bloquées, des ouvertures (17, 18) mutuellement alignées des tiges (10) et des tubes (5) de guidage.

10. Système d'attelage court selon l'une des revendications 1 à 9, caractérisé en ce que les coulisseaux de verrouillage sont agencés ou réalisés sous la forme de tiges de piston (16) appartenant à des ensembles à piston et cylindre (15) dont les cylindres sont fixes par rapport au véhicule tracteur.

11. Système d'attelage court selon l'une des revendications 1 à 10, caractérisé en ce qu'il est prévu des détecteurs de distance qui produisent des signaux reproduisant les distances entre le véhicule tracteur (1) et la remorque (20), et en particulier des signaux qui correspondent aux distances entre les coins voisins - de droite ou de gauche - du véhicule tracteur (1) et de la remorque (20).

FIG. 1

FIG. 2

EP 0 295 589 B1

FIG. 3

FIG. 4

$$a' = f(\alpha)$$